(19) Europäisches Patentamt
European Patent Office
Office européen des brevets

(11) Publication number: **0 122 334**
**B1**

(12) **EUROPEAN PATENT SPECIFICATION**

(45) Date of publication of patent specification: **17.10.90**

(51) Int. Cl.$^5$: **B 23 C 5/22**

(21) Application number: **83112950.7**

(22) Date of filing: **22.12.83**

(54) **Milling cutter and method of assembling therefor.**

(30) Priority: **13.01.83 US 457865**

(43) Date of publication of application:
**24.10.84 Bulletin 84/43**

(45) Publication of the grant of the patent:
**17.10.90 Bulletin 90/42**

(84) Designated Contracting States:
**BE CH DE FR GB IT LI NL SE**

(56) References cited:
**EP-B-0 039 539**
**FR-A-2 141 428**
**FR-A-2 236 593**
**FR-A-2 240 067**
**US-A-1 951 101**
**US-A-2 632 536**
**US-A-3 056 186**
**US-A-3 069 937**
**US-A-3 467 416**

(73) Proprietor: **KENNAMETAL INC.**
**One Lloyd Avenue P.O. Box 231**
**Latrobe Pennsylvania 15650 (US)**

(72) Inventor: **Oshnock, James A.**
**R.D. 6, Box 550**
**Latrobe, Pa. 15650 (US)**
Inventor: **Erickson, Robert A.**
**P.O. Box 382**
**Latrobe, Pa. 15650 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the field of metal cutting tools, and more specifically, to milling cutters. In particular, the present invention relates to a clamp for clamping a cutting insert, a milling cutter wherein the clamp is used and a method of assembling the milling cutter. The nearest prior art is shown in US-A-3467416 disclosing the features of the precharacterizing parts of the independent claims 1, 5 and 9.

In those types of milling cutters having indexable inserts, each insert is clamped into a pocket of the cutter body by a wedge clamp, several of which are well known in the prior art. Most of the inserts so used in milling cutters are made from cemented carbide material.

During the manufacture of the milling cutter, and more particularly, the machining of the insert pockets and clamp recesses as well as the clamp itself, various tolerances are created. The more surfaces that are machined, the more tolerances that are created. While some tolerances may cancel each other out, other tolerances may add together so as to result in a cumulative tolerance.

When the insert is placed in the insert pocket and the wedge applied, this cumulative tolerance may prevent the wedge face from making planar contact with the insert. Instead, the wedge may meet the insert along a line, or perhaps even at a point. With cemented carbide inserts, this nonplanar contact is not a problem since cemented carbides have a certain amount of toughness which allows them to withstand nonplanar contact.

On the other hand, if ceramic inserts are used, as is often the case today, a serious problem is encountered. Ceramic inserts are extremely brittle. If there is nonplanar contact between the wedge face and the insert, as is possible with conventional clamping means, the insert may crack.

US-A-3,467,416 discloses a milling cutter with a cutter body which has insert pockets for accommodating cutting inserts. A clamp is provided which includes a wedge having a bearing surface for contacting a face of the cutting insert to clamp the cutting insert between a bearing surface of the wedge and an insert locating surface in the pocket. The clamping mechanism includes a partially cylindrically shaped carrier member which has a planar face which contacts a planar face of the wedge. The carrier member is accommodated in a partially cylindrical portion of the pocket and can be rotated about its axis to align the planar contacting faces of the wedge and of the carrier member in an attempt to align the bearing surface of the wedge with the contacting surface of the cutting insert. However, as the clamping mechanism provides for freedom of rotational movement in only one direction, fully planar contact between the wedge and the insert cannot be ensured. When ceramic inserts are used, these inserts may crack because of non planar contact between the wedge face and the insert.

It would, of course, be desirable to be able to clamp a ceramic insert without causing it to crack.

Another indexable cutting tool is shown in EP-A-0 039 539. This document discloses an indexable cutting tool with a clamp for clamping a cutting insert in a pocket provided in a cutter body. The pocket is provided with a clamp contact surface and an insert locating surface. The clamp comprises a wedge with a bearing surface for contacting the face of the cutting insert which is located within the pocket of the cutter body. The cutting insert is clamped between the bearing surface of the wedge and the insert locating surface of the pocket. A movement arrangement is provided for moving the wedge relative to the cutter body. A bearing surface is provided in the pocket of the cutter body for contacting the clamp contact surface.

In this known cutting tool, the moving arrangement consists of a screw, one end of which is threaded into the cutter body and the opposite end of which is engaged with the threaded bore of a body member with opposed leading and trailing surfaces. The leading surface of the body member is concave and received in a correspondingly shaped surface of the wedge which faces away from the cutting insert. The trailing surface of the body member is convex and received in a correspondingly shaped recess of the cutter body pocket. The body member can be rotated about the axis of the screw, and the wedge can be pivotably adjusted about an axis perpendicular to the screw axis.

This known cutting tool allows the wedge to be adjusted by rotation about two mutually perpendicular axes. However, the cooperating concave and convex surfaces of the wedge, the body member and the cutter body pocket must be machined to close tolerances which results in increased manufacturing costs.

US-A-I 951 101 discloses a clamp for clamping a cutting insert in a pocket by means of a wedge which has a threaded bore for accommodation of a pressure screw. The wedge has a planar insert contacting surface and an opposed convex pocket wall contacting surface. The cutting insert has a serrated seating surface and the insert locating surface of the pocket has correspondingly shaped serrations. Due to its convex pocket wall contacting surface the wedge initially tends to align its planar insert contacting surface for coplanar contact with the insert. However, as the screw engages the bottom of the pocket and is tightened to urge the wedge away from the pocket bottom, the wedge is no longer free to pivot due to the frictional scraping of the screw against the bottom surface of the pocket.

Another clamp is shown in JP-A-49-84771. In this clamp, a screw with a conical head portion is used, the conical surface portion of the screw head contacting a tapered surface of a wedge which has an insert contacting surface portion on the outer end of its side opposite to the tapered surface. In this clamp, the wedge rotates about the axis of the screw but not about an axis transverse to the screw axis so that no truly coplanar alignment of the insert contacting surface portion and the opposed insert surface is achieved.

According to a first aspect of the invention, a clamp is provided which is defined in claim 1 and which allows the wedge to be adjusted about two mutually perpendicular axes, although basically only two parts are required, i.e. a wedge and a screw, which must not be machined to critical tolerances, just as the opposing surfaces of the pocket in the cutter body.

According to a second aspect of the invention, a milling cutter is provided as defined in claim 5, this milling cutter including a wedge and a screw which provide advantages similar to those achieved with the clamp according to the first aspect of the invention.

According to a third aspect of the invention, a method of assembling a milling cutter is provided which is defined in claim 9.

Further embodiments of the invention are defined in the dependent claims.

According to specific embodiments of the present invention, there is a milling cutter comprising a cutter body rotatable about its central axis, a peripheral wall on the cutter body and insert pockets and clamp recesses located in the peripheral wall. The insert pockets have locating surfaces for positioning an insert when placed in the pocket. There is also clamp means for releasably clamping an insert when the insert is placed and positioned in the pocket. The clamp means freely assumes an orientation identical to that of the insert so that planar contact is made with the insert.

The clamp means has a first planar surface for abutting engagement with an insert and a movement means for advancing and retracting the first planar surface from abutting engagement with the insert. The first planar surface has a preselected limited pivotal movement in all directions about the axis of the movement means when in an unclamped position.

The clamp recess has a clamp contact surface and the movement means has a bearing surface located about its axis. The bearing surface and the first planar surface cooperate through a wedging action transmitting surface so that as the bearing surface abuts the clamp contact surface the first planar surface pivots to conform to the surface orientation of the insert. Preferably, the bearing surface is convex.

The clamp means further comprises a second planar surface opposite the first planar surface. The first and second planar surfaces are rigidly associated with each other and are also associated with a C-shaped perforation within which the bearing surface is rotatably movable. The perforation communicates with the second planar surface. The bearing surface has a portion protruding beyond the perforation and beyond the second planar surface. The bearing surface portion abuts the clamp contact surface when in a clamped position.

More preferably, the clamp means further comprises a retaining ring on the movement means so that the movement means is captively held in the perforation.

The milling cutter further comprises a shim located rearward in the rotational sense of the insert and is interposed between the insert and the insert pocket. Preferably the insert is a hard wear resistant ceramic material.

In another preferred embodiment, the bearing surface is planar and the retaining ring is perpendicular to the bearing surface so that the bearing surface is captively held by the perforation.

The clamp of the present invention comprises a wedge and a movement means cooperating with the wedge. The wedge has a top and bottom joined together on one side by a first planar surface. The first planar surface has a preselected limited pivotal movement in all directions about the axis of the movement means.

Preferably, the movement means has a bearing surface located about its axis. In one preferred embodiment, the bearing surface is convex. preferably, also, the wedge has a second planar surface joining the top and bottom on the opposite side from the first planar surface. The wedge also has a C-shaped perforation between the top and bottom surface and communicating with the second planar surface. The bearing surface is rotatably movable within the perforation and beyond the second planar surface.

More preferably, the wedge perforation has a lip where the perforation intersects the bottom and the movement means has a retaining ring. The movement means is captively held in the perforation by the retaining ring interacting with the lip.

The inventive method of assembling a milling cutter of the type having inserts, insert pockets, clamp recesses and locating surfaces for positioning the inserts, comprises placing an insert into an insert pocket and accurately positioning the insert with respect to a locating surface and then placing a wedge having a first planar surface. cooperating movement means and a bearing surface into the clamp recess so that the first planar surface rests against the insert. The method further comprises advancing the movement means so that the first planar surface rests against the insert and then advancing the movement means so that the first planar surface pivots and freely assumes an orientation identical to that of the insert so that planar contact is made with the insert. A further step is tightening the movement means so that the bearing surface moves into abutting engagement with a clamp contact surface in the clamp recess. The final step of the method comprises repeating each step a number of times corresponding to the number of insert pockets.

Brief Description of the Drawings

The exact nature of the present invention will become more clearly apparent upon reference to the following detailed specification taken in connection with the accompanying drawings in which:

Figure 1 is a plan view of the milling cutter according to the invention.

Figure 2 is a side view of the milling cutter of Figure 1.

Figure 3 is a plan view of the cutter body with associated hardware removed.

Figure 4 is a side view of the cutter body of Figure 3.

Figure 5 is a sectional view of the milling cutter according to the invention along the line V-V of Figure 2.

Figure 6 is an end view of the clamp means of Figure 5.

Figure 7 is a sectional view showing planar contact between an insert and a clamping surface.

Figure 8 is a sectional view showing nonplanar contact between an insert and a clamping surface.

Figure 9 is a sectional view similar to Figure 5 showing another embodiment of the clamp means.

Figure 10 is an end view of the clamp means of Figure 9.

Figure 11 is a sectional view similar to Figure 5 but showing a further embodiment of the clamp means.

Figure 12 is an end view of the clamp means of Figure 11.

Detailed Description of the Invention

Referring to the drawings somewhat more in detail, Figures 1 and 2 show the assembled milling cutter 2. There is a cutter body 4 having a direction of rotation 6, a peripheral wall 8, clamp means 10 and insert 12.

Figures 3 and 4 show the cutter body by itself without the associated hardware. Shown is a chip gash portion 18, an insert pocket 19 and clamp recess 26.

As can be seen in Figures 1 through 4, there is only one station shown. A station comprises a cutter body along with its associated hardware, such as clamp means and inserts. While only one station is shown, it is understood that a milling cutter typically comprises several such stations.

Referring now to Figures 1 through 4 together, disclosed according to the invention is a milling cutter. The milling cutter 2 comprises a cutter body 4, rotatable in the direction of rotation 6 about its central axis. There is a peripheral wall 8 on the cutter body 4 and insert pockets 19 and clamp recesses 26 located in the peripheral wall 8. The insert pockets have locating surfaces 24 for positioning an insert 12 when placed in the pocket 19. There is clamp means 10 for releasably clamping an insert 12 when the insert is placed and positioned in the pocket 19. The clamp means 10 freely assumes an orientation identical to that of the insert so that planar contact is made with the insert.

Referring now to Figures 5 and 6, the clamp means 10 has a first planar surface 30 for abutting engagement with an insert 12. There is a movement means 32 for advancing and retracting the first planar surface 30 from abutting engagement with the insert. The first planar surface 30 has a preselected limited pivotal movement in all directions about the axis 34 of the movement means when in an unclamped position.

The advantages of this invention can best be seen by referring to Figures 7 and 8. Figure 7 shows the first planar surface meeting the insert according to this invention. It is obvious that the first planar surface and the insert are making complete planar contact. Figure 8 shows contact that is achieved according to the prior art. In the prior art clamping means, there would possibly be line or point contact, as shown, for example, at 40. Such line or point contact would be disastrous to ceramic inserts as it would likely cause the insert to crack.

Cemented carbide inserts can survive the nonplanar contact due to their greater toughness; however, the nonplanar contact may cause the insert to tilt slightly within its pocket, which can have an adverse effect on insert life. It is apparent, then, that applicants' invention could be advantageously applied to cemented carbide inserts as well as ceramic inserts.

Referring back to Figures 5 and 6, the clamp recess 26 has a clamp contact surface 28 and the movement means 32 has a bearing surface 42 located about its axis 34. The bearing surface 42 and the first planar surface 30 cooperate through wedging action transmitting surface 43 so that as the bearing surface abuts the clamp contact surface 28, the first planar surface 30 pivots to conform to the surface orientation of the insert 12.

The clamp means further comprises a second planar surface 44 opposite the first planar surface. The first and second planar surfaces are rigidly associated with each other and are also associated with a C-shaped perforation 46 within which the bearing surface 42 is rotatably movable. The perforation communicates with the second planar surface 44. The bearing surface has a portion 48 protruding beyond the perforation and beyond the second planar surface. The bearing surface portion 48 abuts the clamp contact surface 28 when in a clamped position.

In a preferred embodiment, the bearing surface is convex.

In order to achieve the objects of the invention, it is necessary to avoid all contact between the second planar surface 44 and both the clamp contact surface 28 and the top wall 29 of the clamp recess.

Preferably, the clamp means further comprises a retaining ring 50 on movement means 32 so that the movement means is captively held in the perforation 46. The movement means is typically threaded 25 into the back wall 27 of the clamp recess.

The milling cutter further comprises a shim 14 located rearwardly, in the rotational sense, of the insert 12 and is interposed between the insert and the insert pocket 19.

The insert pocket may also have shim locating position 22 and bottom wall 20. As can be seen in Figures 1 and 2, the milling cutter may also have a nest 16 and a second clamp means 11. The second clamp means is used solely for clamping the nest.

Preferably, the insert 12 is a hard wear resistant ceramic material. However, other inserts are contemplated within the scope of the invention. Such other inserts may be cemented carbide inserts as are well known in the art.

Referring back to Figures 5 and 6, according to the invention, there is clamp means 10 for clamping insert 12 to a cutter body 4. The clamp means comprises a wedge 52 and a movement means 32 cooperating with the wedge. The wedge has a top 54 and a bottom 56 joined together on one side by a first planar surface 30. The first planar surface has a preselected limited pivotal movement in all directions about the axis 34 of the movement means.

The movement means has a bearing surface 42 located about its axis 34. The wedge 52 has a second planar surface 44 joining the top 54 and the bottom 56 on the opposite side from the first planar surface. The wedge also has a C-shaped perforation 46 between the top 54 and bottom 56 and communicating with the second planar surface 44. The bearing surface 42 is rotatably movable within the perforation and has a portion 48 protruding beyond the perforation and beyond the second planar surface.

In a preferred embodiment, the bearing surface is convex.

Preferably, the wedge perforation 46 has a lip 58 where the perforation 46 intersects the bottom 56 and the movement means has a retaining ring 50. The movement means is captively held in the perforation by the retaining ring interacting with the lip.

Referring now to Figures 9 and 10, shown is a modified clamp means 10'. The modification principally lies in the head 60 of the movement means wherein the head is slightly recessed. Notwithstanding this modification, the bearing surface 42 and the first planar surface 30 cooperate through wedging action transmitting surface 43, as before, so that as the bearing surface abuts the clamp contact surface 28, the fist planar surface 30 pivots to conform to the surface orientation of the insert 12.

While it is preferred to have the clamp means forward, in the rotational sense of the insert, it is also contemplated within the scope of the invention to have the clamp means rearward of the insert, as is shown in Figures 11 and 12. Bearing surface 42 of modified clamp means 10'' has a portion which abuts clamp contact surface 28 when in a clamped position. Wedging action transmitting surface 43 is located slightly differently but, nevertheless, cooperates in a similar manner with first planar surface 30 and bearing surface 42.

According to the invention, there is a method of assembling a milling cutter of the type having inserts, insert pockets, clamp recesses and locating surfaces for positioning the inserts.

The method comprises placing an insert 12 into an insert pocket 19 and accurately positioning the insert with respect to a locating surface 24. The next step is placing a wedge 52 having a first planar surface 30, cooperating movement means 32 and a bearing surface (42 or 72) into the clamp recess so that the first planar surface rests against the insert. A further step is advancing the movement means so that the first planar surface pivots and freely assumes an orientation identical to that of the insert so that planar contact is made with the insert. The method further comprises tightening the movement means so that the bearing surface (42 or 72) moves into abutting engagement with a clamp contact surface 28 in the clamp recess 26. The final step of the process comprises repeating each step a number of times corresponding to the number of insert pockets.

A milling cutter station typically comprises a cutter body and associated hardware such as inserts, clamps, shims and the like. As shown in the figures, there is only one station. However, it is understood that in the milling cutters with which this invention is most concerned, there will be several such stations.

Modifications may be made within the scope of the appended claims.

**Claims**

1. A clamp (10, 10', 10'') for clamping a cutting insert (12) having a face within a pocket (19) provided in a cutter body (4), said pocket (19) being provided with a clamp contact surface (28) and an insert locating surface (24), said clamp (10, 10', 10'') comprising:

a wedge (52) having a first bearing surface (30) for contacting said face of said cutting insert and thereby clamping said cutting insert (12) between said first bearing surface (30) and said insert locating surface (24) provided in said pocket (19);

a movement assembly (32) for moving said wedge (52) relative to said cutter body (4); and

a second bearing surface (48) provided on said movement assembly (32) and for contacting said clamp contact surface (28) provided in said pocket (19);

characterized in that said movement assembly (32) includes a fastening arrangement (32) which fastens to the cutter body (4), in that at least a portion of said movement assembly (32) has a curved surface (43), said curved surface (43) being curved in cross section, both in a direction substantially parallel to the longitudinal axis (34) of said movement assembly (32), as well as in a direction substantially transverse to the longitudinal axis (34) of said movement assembly (32), and in that said wedge (52) has a surface which slidingly engages said curved surface (43), such that said wedge (52) is both slidable about the longitudinal axis (34) of said movement assembly (32) as well as slidable about said movement assembly (32) on said curved surface (43) provided on said movement assembly (32) about at least one axis which is transverse to the longitudinal axis (34) of said movement assembly (32).

2. A clamp (10) according to claim 1, wherein said wedge has another surface (44) opposed to said first bearing surface (30) and is provided with a thoroughgoing C-shaped perforation (46), and wherein said movement assembly (32) is disposed within said C-shaped perforation (46) and protrudes at least partially beyond said other surface (44).

3. A clamp (10) according to claim 2, further comprising:

a lip (58) provided on the interior of said C-shaped perforation (46); and

a retaining ring (50) provided on said movement assembly (32), said retaining ring (50) engaging said lip (58) to thereby captively retain said movement assembly (32) within said C-shaped perforation (46).

4. A clamp (10) according to any of claims 1 to 3, wherein said second bearing surface (48) is convex.

5. A milling cutter (2), comprising:

a rotatable cutter body (4) having a peripheral wall (8), said peripheral wall being provided with an insert pocket (18) for accepting a cutting insert (12), said insert pocket (18) having a clamp contact surface (28) and an insert locating surface (24); and a clamp (10, 10', 10'') comprising:

a wedge (52) having a first bearing surface (30) for contacting said face of said cutting insert and thereby clamping said cutting insert (12) between said first bearing surface (30) and said insert locating surface (24) provided in said pocket (19);

a movement assembly (32) for moving said wedge (52) relative to said cutter body (4);

a second bearing surface (48) provided on said movement assembly (32) for contacting said clamp contact surface (28) provided in said pocket (18);

characterized in that said movement assembly (32) includes a fastening arrangement (32) which fastens to the cutter body (4) in that at least a portion of said movement assembly (32) has a curved surface (43), said curved surface (43) being curved in cross section, both in a direction substantially parallel to the longitudinal axis (34) of said movement assembly (32) as well as in a direction substantially transverse to the longitudinal axis (34) of said movement assembly (32) and in that said wedge (52) has a surface which slidingly engages said curved surface (43), such that said wedge (52) is both slidable about the longitudinal axis (34) of said movement assembly (32) as well as slidable about said movement assembly (32) on said curved surface (43) provided on said movement assembly (32) about at least one axis which is transverse to the longitudinal axis (34) of said movement assembly (32).

6. A milling cutter (2) according to claim 5, wherein said wedge (52) has another surface (44) opposed to said first bearing surface (30) and is provided with a thoroughgoing C-shaped perforation (46), and wherein said movement assembly (32) is disposed within said C-shaped perforation (46) and protrudes at least partially beyond said other surface (44).

7. A milling cutter (2) according to claim 6, further comprising:

a lip (58) provided on the interior of said C-shaped perforation (46); and

a retaining ring (50) provided on said movement assembly (32), said retaining ring (50) engaging said lip (58) to thereby captively retain said movement assembly (32) with said C-shaped perforation (46).

8. A milling cutter (2) according to any of claims 5 to 7, wherein said second bearing surface (48) is convex.

9. A method of assembling a milling cutter (2), said milling cutter (2) comprising a rotatable cutter body (4) having a peripheral wall (8), said peripheral wall (8) being provided with an insert pocket (18) for accepting a cutting insert (12), said insert pocket (18) having a clamp contact surface (28) and an insert locating surface (24), said method comprising the steps of:

placing the cutting insert (12) into said insert pocket (18) and accurately positioning the cutting insert (12) with respect to said locating surface (24);

placing a clamp (10, 10', 10'') into said insert pocket (18), said clamp (10, 10', 10'') comprising a wedge (52) having a first bearing surface (30) for contacting a face of said cutting surface and thereby clamping said cutting insert (12) between said first bearing surface (30) and said insert locating surface (24) provided in said pocket (19); and

using a movement assembly (32) for moving said wedge (52) relative to said cutter body (4), and provided with a second bearing surface (48) for contacting said clamp contact surface (28); the method being characterized in that said movement assembly (32) includes a fastening arrangement (32) which fastens to the cutter body (4) in that at least a portion of said movement assembly (32) has a curved surface (43), said curved surface (43) being curved in cross section, both in a direction substantially parallel to the longitudinal axis (34) of said movement assembly (32) as well as in a direction substantially transverse to the longitudinal axis (34) of said movement assembly (32) and in that said wedge (52) has a surface which slidingly engages said curved surface (43), such that said wedge (52) is both slidable about the longitudinal axis (34) of said movement assembly (32) as well as slidable about said movement assembly (32) on said curved surface (43) provided on said movement assembly (32) about at least one axis which is transverse to the longitudinal axis (34) of said movement assembly (32), and in that said movement assembly (32) is advanced so as to align said first bearing surface (30) with the face of said cutting insert (12) and such that said second bearing surface (48) abuts said clamp contact surface (28) and said cutting insert (12) is clamped between said first bearing surface (30) and said insert locating surface (24).

**Patentansprüche**

1. Spannvorrichtung (10, 10', 10'') zum Festspannen eines Schneideinsatzes, welcher eine Fläche aufweist, innerhalb einer in einem Schneidwerkzeugkörper (4) ausgebildeten Tasche (19), wobei die Tasche (19) mit einer Spann-Anlagefläche (28) und einer Einschub-Positionierfläche (24) versehen ist; die Spannvorrichtung (10, 10', 10'') enthält:

einen Keil (52) mit einer ersten Stützfläche (30) zur Anlage an der genannten Fläche des Schneideinsatzes, wodurch der Schneideinsatz (12) zwischen der ersten Stützfläche (30) und der in der Tasche (19) ausgebildeten Einschub-Positionierfläche (24) festgespannt wird;

eine Bewegungsvorrichtung (32) zur Bewegung des Keils (52) relativ zu dem Schneidwerkzeugkörper (4); und

eine zweite, an der Bewegungsvorrichtung (32) ausgebildete Stützfläche (48) zur Anlage an der in der Tasche (19) ausgebildeten Spann-Anlagefläche (28);

dadurch gekennzeichnet, daß die Bewegungsvorrichtung (32) eine Befestigungsvorrichtung (32) aufweist, welche an dem Schneidwerkzeugkörper (4) befestigt ist, daß wenigstens ein Teil der Bewegungsvorrichtung (32) eine gekrümmte Fläche (43) aufweist, wobei die gekrümmte Fläche (43) im Querschnitt gekrümmt ist, sowohl in einer im wesentlichen zu der Längsachse (34) der Bewegungsvorrichtung parallelen Richtung als auch in einer im wesentlichen quer zu der Längsachse (34) der Bewegungsvorrichtung (32) verlaufenden Richtung, und daß der Keil (52) eine Oberfläche aufweist, welche gleitend an der gekrümmten Fläche (43) angreift, so daß der Keil (52) sowohl um die Längsachse (34) der Bewegungsvorrichtung (32) gleiten kann als auch um die Bewegungsvorrichtung (32) auf der an der Bewegungsvorrichtung (32) ausgebildeten gekrümmten Fläche (43) um zumindest eine Achse, welche quer zu der Längsachse (34) der Bewegungsvorrichtung steht, gleiten kann.

2. Spannvorrichtung (10) nach Anspruch 1, wobei der Keil eine der ersten Stützfläche (30) gegenüberliegende andere Fläche (44) aufweist und mit einer durchgehenden, C-förmigen Lochung (46) versehen ist, und wobei die Bewegungsvorrichtung (32) innerhalb der C-förmigen Lochung (46) angeordnet ist und zumindest teilweise über die andere Fläche (44) hinaus vorsteht.

3. Spannvorrichtung (10) nach Anspruch 2, ferner enthaltend:

eine im Inneren der C-förmigen Lochung (46) ausgebildete Lippe (58); und

einen an der Bewegungsvorrichtung (32) vorgesehenen Sprengring (50), welcher Sprengring (50) in die Lippe (58) eingreift und dadurch die Bewegungsvorrichtung (32) unverlierbar innerhalb der C-förmigen Lochung (46) zurückhält.

4. Spannvorrichtung (10) nach einem der Ansprüche 1 bis 3, wobei die zweite Stützfläche (48) konvex ist.

5. Fräswerkzeug (2), enthaltend:

einen drehbaren Fräserkörper (4) mit einer peripheren Wandung (8), welche periphere Wandung mit einer Einsatztasche (18) zur Aufnahme eines Schneideinsatzes (12) versehen ist, wobei die Einsatztasche (18) eine Spann-Anlagefläche (28) und eine Einschub-Positionierfläche (24) aufweist; und einer Spannvorrichtung (10, 10', 10''), enthaltend:

einen Keil (52) mit einer ersten Stützfläche (30) zur Anlage an der genannten Fläche des Schneideinsatzes, wodurch der Schneideinsatz (12) zwischen der ersten Stützfläche (30) und der in der Tasche (19) ausgebildeten Einschubpositionierfläche (24) festgespannt wird;

eine Bewegungsvorrichtung (32) zur Bewegung des Keils (52) relativ zu dem Schneidwerkzeugkörper (4); und

eine zweite, an der Bewegungsvorrichtung (32) ausgebildete Stützfläche zur Anlage an der in der Tasche (18) ausgebildeten Spann-Anlagefläche (28);

dadurch gekennzeichnet, daß die Bewegungsvorrichtung (32) eine Befestigungsvorrichtung (32) aufweist, welche an dem Schneidwerkzeugkörper (4) befestigt ist, daß wenigstens ein Teil der Bewegungsvorrichtung (32) eine gekrümmte Fläche (43) aufweist, wobei die gekrümmte Fläche (43) im Querschnitt gekrümmt ist, sowohl in einer im wesentlichen zu der Längsachse (34) der Bewegungsvorrichtung parallelen Richtung als auch in einer im wesentlichen quer zu der Längsachse (34) der Bewegungsvorrichtung (32) verlaufenden Richtung, und daß der Keil (52) eine Oberfläche aufweist, welche gleitend an der gekrümmten Fläche (43) angreift, so daß der Keil (52) sowohl um die Längsachse (34) der Bewegungsvorrichtung (32) gleiten kann als auch um die Bewegungsvorrichtung (32) auf der an der Bewegungsvorrichtung (32) ausgebildeten gekrümmten Fläche (43) um zumindest eine Achse, welche quer zu der Längsachse (34) der Bewegungsvorrichtung steht, gleiten kann.

6. Fräswerkzeug (2) nach Anspruch 5, wobei der Keil (52) eine der ersten Stützfläche (30) gegenüberliegende andere Fläche (44) aufweist und mit einer durchgehenden, C-förmigen Lochung (46) versehen ist, und wobei die Bewegungsvorrichtung (32) innerhalb der C-förmigen Lochung (46) angeordnet ist und zumindest teilweise über die andere Fläche (44) hinaus vorsteht.

7. Fräswerkzeug (2) nach Anspruch 6, ferner enthaltend:

eine im Inneren der C-förmigen Lochung (46) ausgebildete Lippe (58); und

einen an der Bewegungsvorrichtung (32) vorgesehenen Sprengring (50), welcher Sprengring (50) in die Lippe (58) eingreift und dadurch die Bewegungsvorrichtung (32) unverlierbar innerhalb der C-förmigen Lochung (46) zurückhält.

8. Fräswerkzeug (2) nach einem der Ansprüche 5 bis 7, wobei die zweite Stützfläche (48) konvex ist.

9. Verfahren zum Zusammenbau eines Fräswerkzeugs (2), welches Fräswerkzeug (2) einen drehbaren Fräserkörper (4) mit einer peripheren Wandung (8) aufweist, wobei die periphere Wandung (8) mit einer Einsatztasche (18) zur Aufnahme eines Schneideinsatzes (12) versehen ist, wobei die Einsatztasche (18) eine Spann-Anlagefläche (28) und eine Einschub-Positionierfläche (24) aufweist, während das Verfahren die Schritte enthält:

Einsetzen des Schneideinsatzes (12) in die Einsatztasche (18) und genaues Positionieren des Schneideinsatzes (12) bezüglich der Zentrierfläche (24);

Einsetzen einer Spannvorrichtung (10, 10', 10'') in die Einsatztasche (18), wobei die Spannvorrichtung (10, 10', 10'') einen Keil (52) aufweist mit einer erten Stützfläche (30) zur Anlage an die genannte Fläche des Schneideinsatzes, wodurch der Schneideinsatz (12) zwischen der ersten Stützfläche (30) und der in der Tasche (19) ausgebildeten Einschub-Zentrierfläche (24) festgespannt wird; und

Verwenden einer Bewegungsvorrichtung zur Bewegung des Keils (52) relativ zu dem Schneidwerkzeugkörper (4), welche mit einer zweiten Stützfläche (48) zur Anlage an die Spann-Anlagefläche (28) versehen ist;

dadurch gekennzeichnet, daß die Bewegungsvorrichtung (32) eine Befestigungsvorrichtung (32) aufweist, welche an dem Schneidwerkzeugkörper (4) befestigt ist, daß wenigstens ein Teil der Bewegungsvorrichtung (32) eine gekrümmte Fläche (43) aufweist, wobei die gekrümmte Fläche (43) im Querschnitt gekrümmt ist, sowohl in einer im wesentlichen zu der Längsachse (34) der Bewegungsvorrichtung parallelen Richtung als auch in einer im wesentlichen quer zu der Längsachse (34) der Bewegungsvorrichtung (32) verlaufenden Richtung, und daß der Keil (52) eine Oberfläche aufweist, welche gleitend an der gekrümmten Fläche (43) angreift, so daß der Keil (52) sowohl um die Längsachse (34) der Bewegungsvorrichtung (32) gleiten kann als auch um die Bewegungsvorrichtung (32) auf der an der Bewegungsvorrichtung (32) ausgebildeten gekrümmten Fläche (43) um zumindest eine Achse, welche quer zu der Längsachse (34) der Bewegungsvorrichtung steht, gleiten kann, und daß die Bewegungsvorrichtung (32) vorgeschoben wird, so daß die erste Stützfläche (30) mit der Seite des Schneideinsatzes (12) fluchtet und die zweite Stützfläche (48) an die Spann-Anlagefläche (28) anstößt und der Schneideinsatz (12) zwischen der ersten Stützfläche (30) und der Einschub-Positionierfläche (24) festgespannt wird.

**Revendications**

1. Organe de serrage (10, 10', 10'') dastiné au maintien d'un insert de coupe (12) qui est muni d'une face à l'intérieur d'une poche (19) ménagée dans un corps de fraise (4), ladita poche (19) présentant une surface (28) de contact pour l'organe de serrage et une surface (24) de positionnement d'insert, ladite pince (10, 10', 10'') comprenant

un coin (52) muni d'une première surface de portée (30) destinée à venir en contact avec ladite face dudit insert de coupe at de ce fait à serrer ledit insert de coupe (12) entre ladite première surface de portée (30) et ladite surface (24) de positionnement d'insert ménagée dans ladite poche (19);

un ensemble de déplacement (32) destiné à déplacer ledit coin (52) par rapport audit corps de fraise (4); et

une seconde surface de portée (48) ménagée sur ledit ensemble de déplacement (32) et destinée à venir en contact avec ladite surface (28) de contact pour l'organe de serrage ménagée dans ladite poche (19);

caractérisé en ce que ledit ensemble de déplacement (32) comprend un ensemble de fixation (32) qui est fixé au corps de fraise (4), en ce que au moins une partie dudit ensemble da déplacement (32) a une surface incurvée (43), ladita surface incurvée (43) ayant une section transversale incurvée tant dans une direction pratiquement parallèle à l'axe longitudinal (34) dudit ensemble da déplacement (32), que dans une direction pratiquement transversale à l'axe longitudinal (34) dudit ensemble de déplacement (32), et en ce que ladit coin (52) a une surface qui engage en coulissement ladite surface incurvée (43), de telle sorte que ledit coin (52) peut coulisser aussi bien selon l'axe longitudinal (34) de l'ensemble de déplacement (32) que par rapport audit ensemble de déplacement (32) sur ladite surface incurvée (43) ménagée sur ledit ensemble de déplacement (32) selon au moins un axe transversal à l'axe longitudinal (34) dudit ensemble de déplacement (32).

2. Organa de serrage (10) selon la revendication 1, caractérisé en ce que ledit coin comporte une autre surface (44) opposée à ladite première surface de portée (30) et est muni d'une perforation traversante (46) en forme de C, at en ce que ledit ensemble de déplacement (32) est disposé à l'intérieur de ladite perforation (46) en forme de C at fait saillie au moins partiellement au-delà de ladite autre surface (44).

3. Organe de serrage (10) selon la revendication 2, caractérisé en ce qu'il comprend en outre:

une lèvre (58) ménagée à l'intérieur de ladite perforation (46) en forme de C;

et un anneau de retenue (50) prévu sur ledit ensemble de déplacement (32), ledit anneau de retenue (50) engageant ladite lèvre (58) afin de maintenir ledit ensemble de déplacement (32) captif à l'intérieur de ladite perforation (46) en forme de C.

4. Organe de serrage (10) selon l'une quelconque des revendications 1 à 3, caractérisé en ce que ladite seconde surface de portée (48) est convexe.

5. Fraise (2), comprenant:

un corps de fraise rotatif (4) doté d'une paroi périphérique (8), ladite paroi périphérique étant munie d'une poche (18) d'insert destinée à recevoir un insert de coupe (12), ladite poche d'insert (18) présentant une surface de contact pour organe de serrage (28) et une surface (24) de positionnement d'insert; et un organe de serrage (10, 10', 10'') comprenant:

un coin (52) muni d'une première surface de portée (30) destinée à entrer en contact avec ladite face dudit insert de coupe et de ce fait maintenir ledit insert de coupe (12) entre ladite première surface de portée (30) et ladite surface (24) de positionnement d'insert ménagée dans ladite poche (19);

un ensemble de déplacement (32) destiné à déplacer ledit coin (52) par rapport audit corps de fraise (4);

une seconde surface de portée (48) ménagée sur ledit ensemble de déplacement (32) afin de venir en contact avec ladite surface (28) de contact pour organe de serrage ménagée dans ladita pocha (18);

caractérisée en ce que ledit ensemble de déplacement (32) comprend un ensemble de fixation (32) qui se fixe sur le corps de fraise (4), en ce que au moins une partie dudit ensemble de déplacement (32) a une surface incurvée (43), ladite surface incurvée (43) ayant une section transversale incurvée tant dans une direction pratiquement parallèle à l'axe longitudinal (34) dudit ensemble de déplacement (32), que dans une direction pratiquement transversale à l'axe longitudinal (34) dudit ensemble de déplacement (32), et en ce que ledit coin (52) a une surface qui engage en coulissement ladite surface incurvée (43), de telle sorte que ledit coin (52) paut coulisser aussi bien selon l'axe longitudinal (34) de l'ensemble de déplacement (32) que par rapport audit ensemble de déplacement (32) sur ladite surface incurvée (43) ménagée sur ledit ensemble de déplacement (32) selon au moins un axe transversal à l'axe longitudinal (34) dudit ensemble de déplacement (32).

6. Fraise (2) selon la revendication 5, caractérisée en ce que ledit coin (52) comporte une autre surface (44) opposée à ladite première surface de portée (30) et comporte une perforation traversante (46) en forme de C, et an ce que ledit ensemble de déplacement (32) est disposé à l'intérieur de ladite perforation en forme de C (46) et fait saillie au moins partiellement au-delà de ladite autre surface (44).

7. Fraise (2) selon la revendication 6, caractérisée en ce qu'elle comprend en outre:

une lèvre (58) ménagée à l'intérieur de ladite perforation (46) en forme da C; et

un anneau de retenue (50) prévu sur ledit ensemble de déplacement (32), ledit anneau de retenue (50) engageant ladite lèvre (58) afin de maintenir ledit ensemble de déplacement (32) captif à l'intérieur de ladite perforation (46) en forme de C.

8. Fraise 2 selon l'une quelconque des revendications 5 à 7, caractérisée en ce que ladite seconde surface de portée (48) est convexe.

9. Procédé d'assemblage d'une fraise (2), ladite fraise (2) comprenant un corps de fraise rotatif (4) doté d'une paroi périphérique (8), ladite paroi périphérique (8) étant munie d'une poche (18) d'insert destinée à recevoir un insert de coupe (12), ladite poche d'insert (18) présentant une surface (28) de contact pour organe de serrage et une surface (24) de positionnement d'insert; ledit procédé comprenant les étapes consistant à:

placer l'insert de coupe (12) dans ladite poche d'insert (18) et positionner avec précision l'insert de coupe (12) par rapport à ladite surface de positionnement (24);

placer un organe de serrage (10, 10', 10'') à l'intérieur de ladite poche d'insert (18), ledit organe de serrage (10, 10', 10'') comprenant un coin (52) comportant una première surface de portée (30) destinée à rentrer en contact avec une face dudit insert de coupe et de ce fait maintenir ledit insert de coupe (12) entre ladite première surface de portée (30) et ladite surface (24) de positionnement d'insert ménagée dans ladite poche (19); et

utiliser un ensemble de déplacement (32) afin de déplacer ledit coin (52) par rapport audit corps de fraise (4), et doté d'une seconde surface de portée (48) destinée à entrer en contact avec ladite surface (28) de contact pour organe de serrage; le procédé étant caractérisé en ce que ledit ensemble de déplacement (32) comprend un ensemble de fixation (32) qui se fixe sur le corps de fraise (4), en ce que au moins une partie dudit ensemble de déplacement (32) a une surface incurvée (43), ladite surface incurvée (43) ayant une section transversale incurvée tant dans une direction pratiquement parallèle à l'axe longitudinal (34) dudit ensemble de déplacement (32), que dans une direction pratiquement transversale à l'axe longitudinal (34) dudit ensemble de déplacement (32), et en ce que ladit coin (52) a une surface qui engage en coulissement ladite surface incurvée (43), da telle sorte que ledit coin (52) peut coulisser aussi bien selon l'axe longitudinal (34) de l'ensemble de déplacement (32) que par rapport audit ensemble de déplacement (32) sur ladite surface incurvée (43) ménagée sur ledit ensemble de déplacement (32) selon au moins un axe transversal à l'axe longitudinal (34) dudit ensemble de déplacement (32), et en ce que ledit ensemble de déplacement (32) est avancé de manière à aligner ladite première surface de portée (30) avec la face dudit insert de coupe (12) et de telle manière que ladite seconde surface de portée (48) vienne en butée contre ladite surface (28) de contact pour organe de serrage et ledit insert de coupe (12) soit maintenu entre ladite première surface de portée (30) et ladite surface (24) de positionnement d'insert.

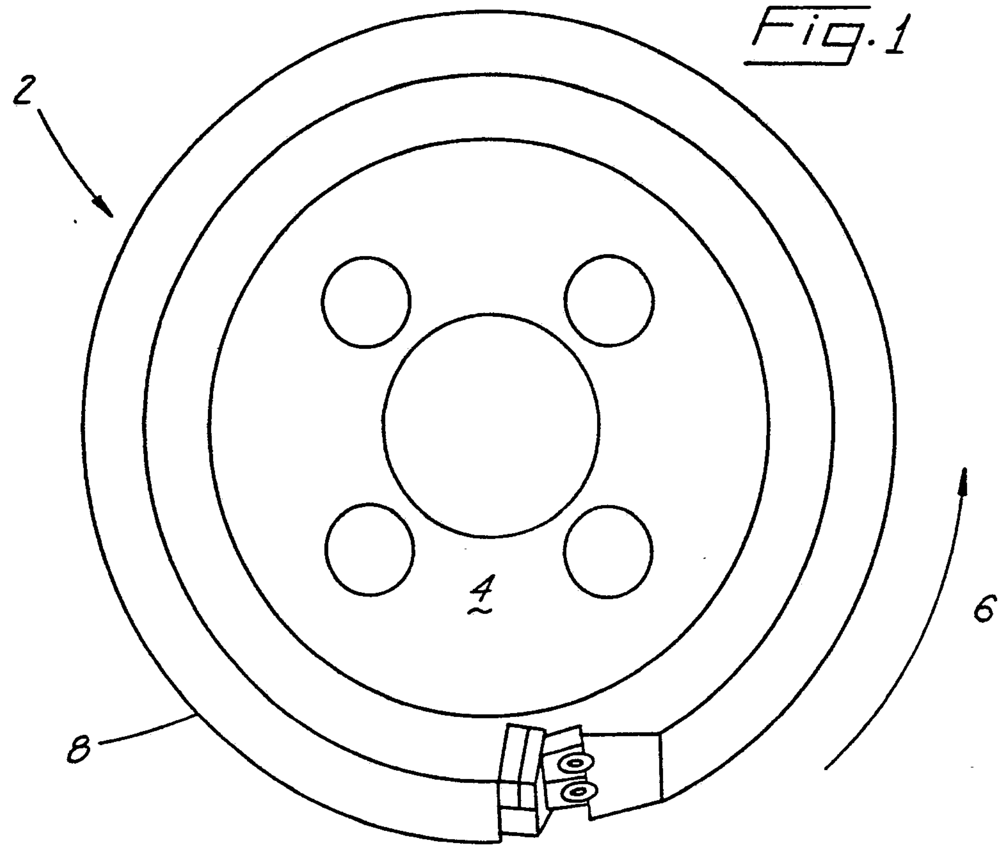


Fig.1

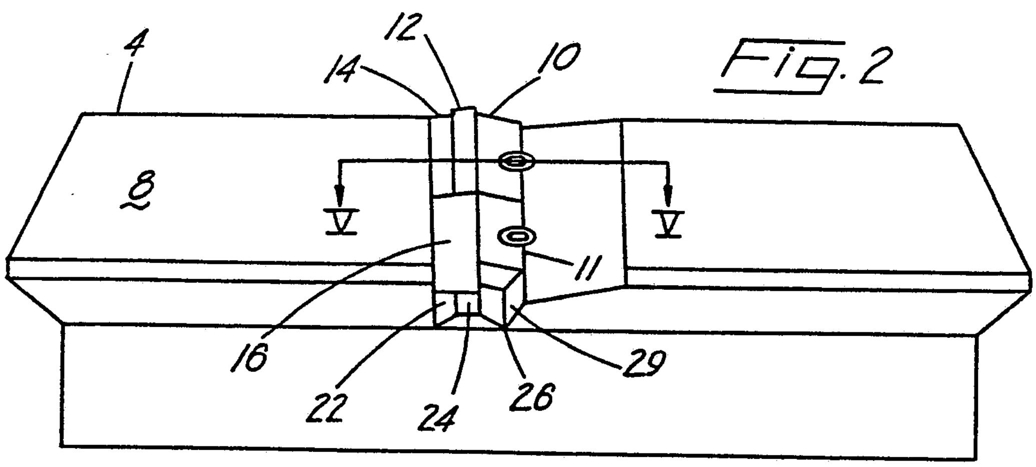


Fig.2

Fig. 3

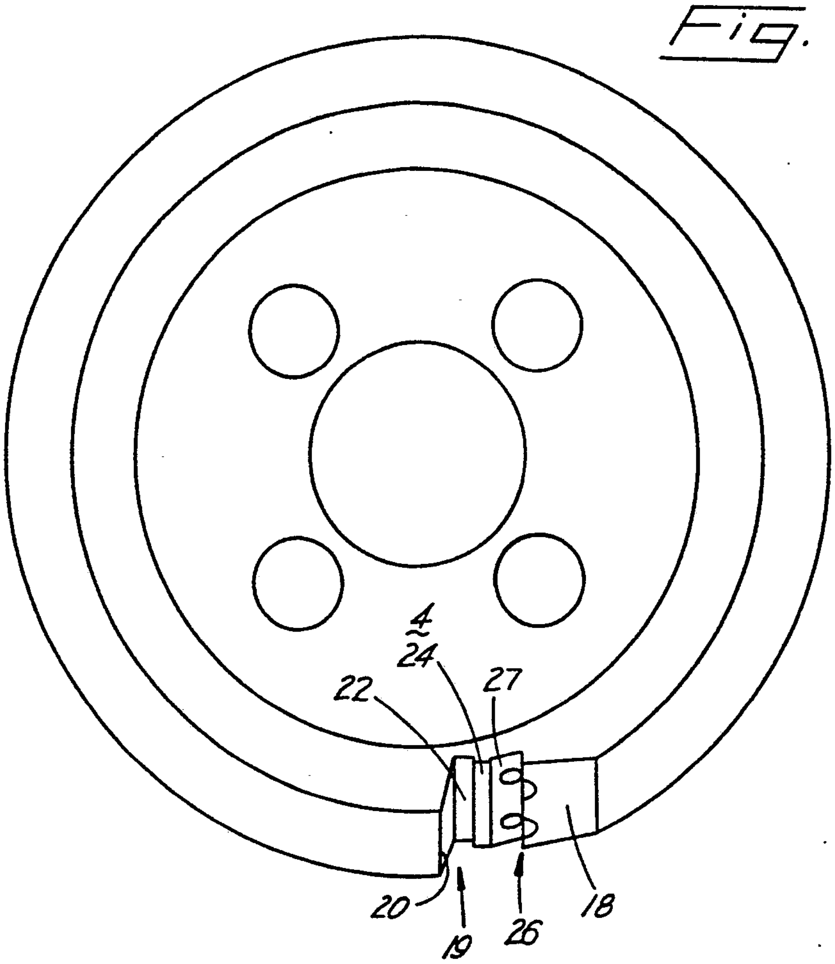


Fig. 4

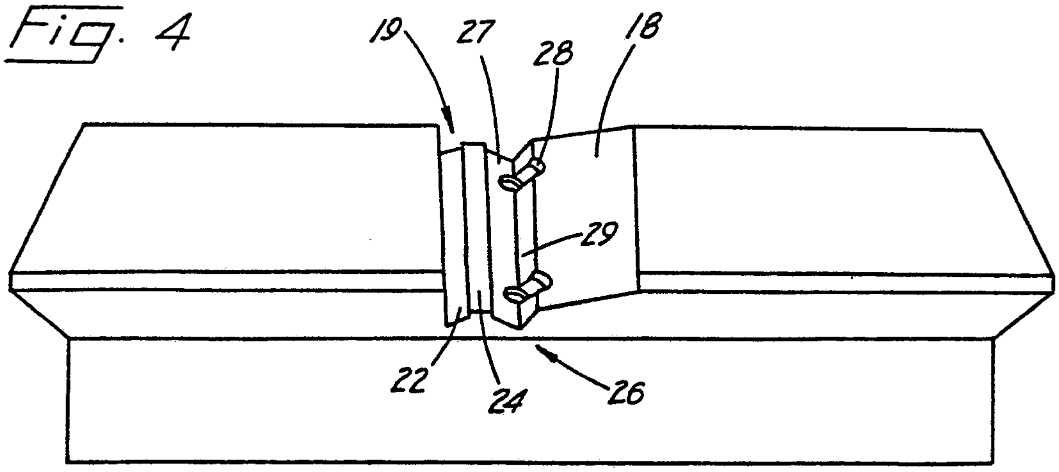

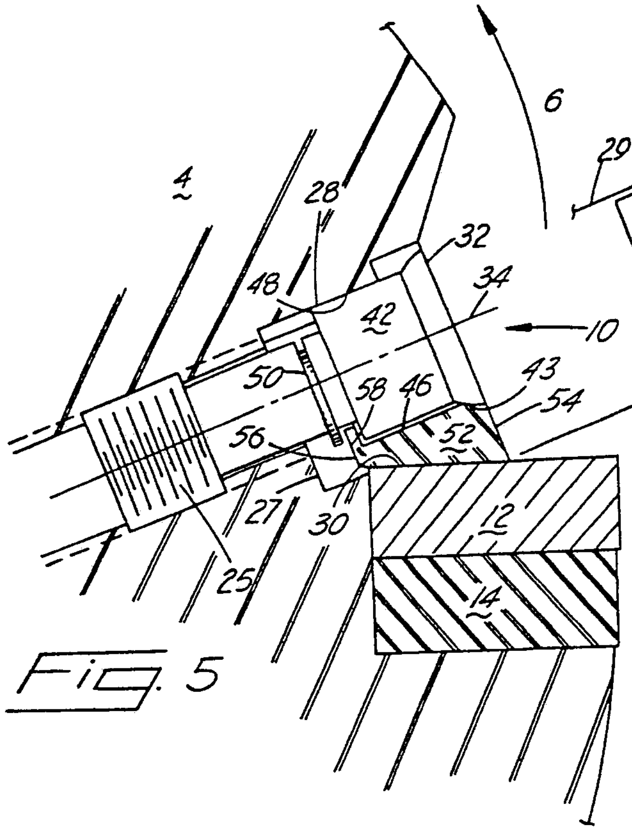


Fig. 5

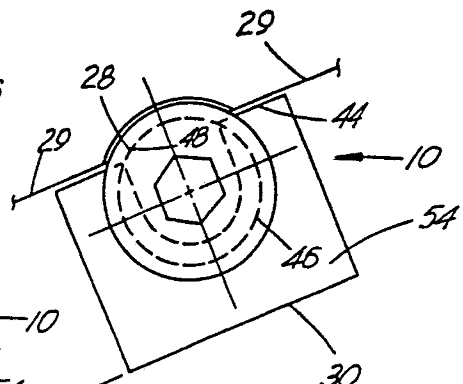


Fig. 6

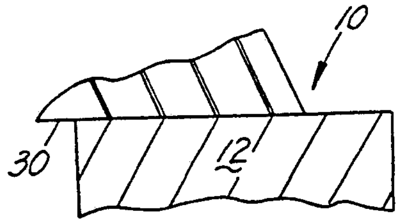


Fig. 7

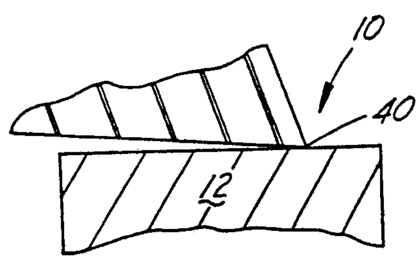


Fig. 8

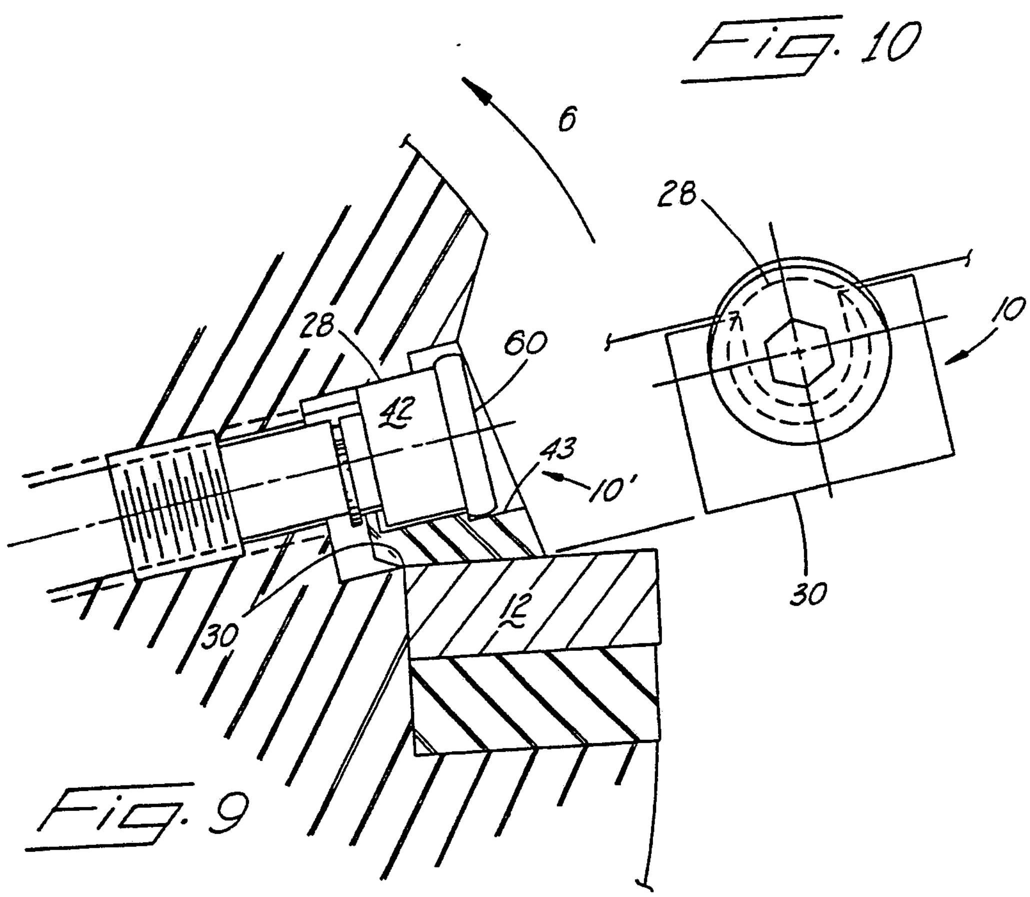
Fig. 10
6
28
10'
30
28
60
42
43
10'
30
12
Fig. 9

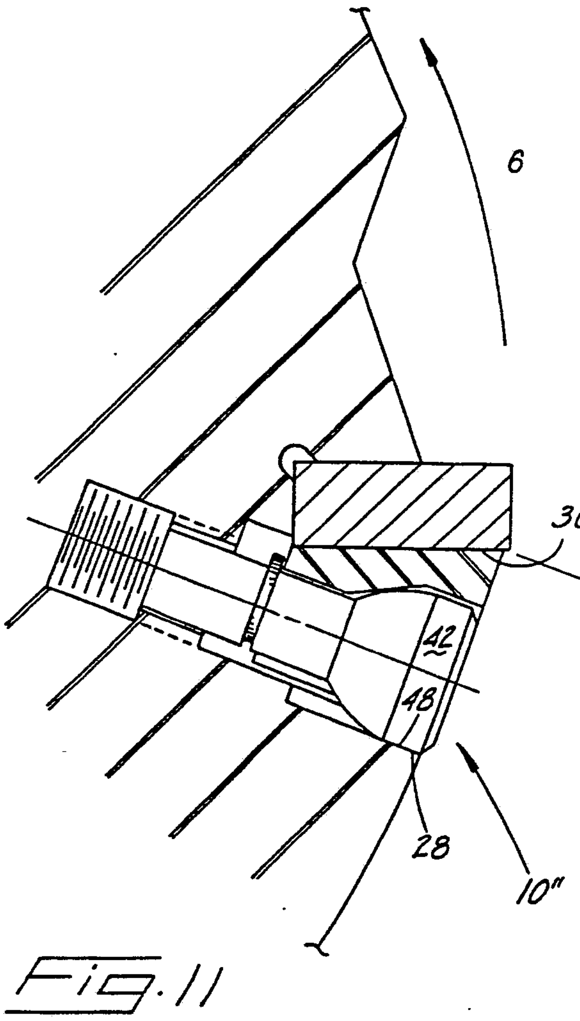


Fig. 11

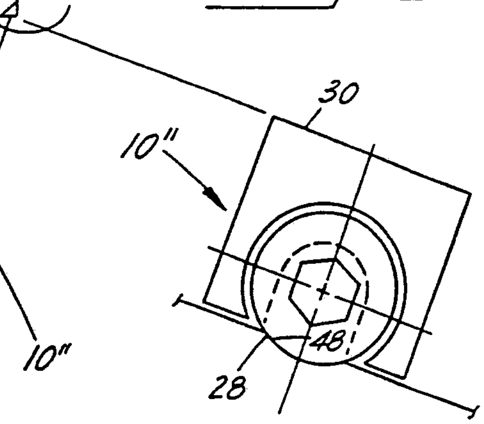


Fig. 12